# EUROPEAN PATENT APPLICATION

(11) **EP 3 258 465 A1**
(43) Date of publication of application: **20.12.2017**
(21) Application number: 16175023.7
(22) Date of filing: 17.06.2016
(51) Int. Cl.: G09G 5/06, G06F 3/048

(54) **A METHOD FOR AUTOMATIC ADAPTATION OF A USER INTERFACE**

(71) Applicant: Ningbo Geely Automobile Research & Development Co., Ltd., Ningbo, Postcode 315336 (CN)
(72) Inventor: FALKÅS, Helén, 413 03 Göteborg (SE); SCHIMUNECK, Anderson, 414 51 Göteborg (SE); HEUMAN, Nils, 416 75 Göteborg (SE); SANTOS, Allysson, 411 24 Göteborg (SE)
(74) Representative: Ström & Gulliksson AB

(57) **Abstract**

A method for automatic adaptation of a graphical user interface in a vehicle is provided. The method comprises i) selecting an image; ii) computing the dominant color of said image; iii) determining an accent color based on the computed dominant color, said accent color being selected from a limited number of available colors, iv) applying said image to a graphical user interface of a first display, and v) updating the color of at least one element of said graphical user interface to the determined accent color.

## Description

### Technical Field

The present invention relates to a method for automatic adaption of a user interface, and in particular to a method for automatic customization of a graphical user interface in automotive applications, such as dashboards or clusters, etc.

### Background

For various reasons it may be desired to adapt a graphical user interface for conforming to user specifications or criteria; typically such adaptations may include changing an underlying theme, or adding a background image to the graphical user interface. When a background image is changed, a severe mismatch of the current design compared to the newly selected background image may occur. Therefore a user may want to change the design theme in order for it to harmonize with the color content of the selected background image.

Determining a suitable color palette for use with a specific background image is a delicate design process, and it may be difficult for a user without specific knowledge of graphical design to create appealing themes especially with regards to the colors used.

Although some solutions for automatic color adaptation of graphical user interfaces have been suggested, specific requirements need to be considered for graphical user interfaces within vehicle applications. Modern cars may be provided with several displays, each sharing a common design concept but utilizing different graphical user interfaces. Such displays may e.g. include the dashboard, or cluster, and the center stack display used for e.g. infotainment. Hence, an adaptation of the graphical user interface for one display may not necessarily result in a desired adaptation of the graphical user interface of another display.

Further, the processing power provided in vehicle electronics is limited compared to what is available for other high performance stand-alone applications.

In view of this, it would be desirable to provide a method for automatic adaptation of graphical user interfaces which is more efficient in terms of processing power and memory usage.

### Summary

An object of the present invention is to fulfill the need for improvements of prior art solutions and methods which have been identified.

This object is achieved by a method for automatic adaptation of a graphical user interface in a vehicle. The method comprises selecting an image, computing the dominant color of said image, determining an accent color based on the computed dominant color, said accent color being selected from a limited number of available colors, applying said image to a graphical user interface of a first display, and updating the color of at least one element of said graphical user interface to the determined accent color.

This has the benefit that the image and the element(s) in the graphical user interface are adapted to have colors that matches well together. An appealing design of the graphical user interfaces has thus been achieved automatically based on the selected image.

In one embodiment, computing the dominant color of said image comprises reducing the size of the image, and extracting the dominant color from the reduced image. Determining the dominant color of the image makes it possible to use this color information to determined suitable accent colors and thus create a suitable color theme. For example, in this way element(s) of the graphical user interface may be given a color matching an image of the graphical user interface.

Reducing the size of the image may be performed by transforming the image to a quadratic shape. Reducing the size of the image may result in an image size of 16x16 pixels. The size reduction is performed in order to save valuable memory space and decrease the computational time of the adaption of the graphical user interface.

Any black or white pixels may be ignored when computing the dominant color. By eliminating white and black colors the dominant color will be a "real" color more suitable to be used as an image. This helps improve the color patterns of the adapted image.

In one embodiment, computing the dominant color of said image further comprises comparing the HUE levels of the determined dominant color with preset upper and lower threshold values, and if the HUE levels of the dominant color is outside said threshold values replacing the computed dominant color by a default dominant color. Colors having undesirable saturation and lightness values can thus be filtered out. This further enhances the color patterns of the adapted graphical user interface.

The method may further comprise transmitting information relating to the determined accent color to a graphical user interface of a remote display, and updating the color of at least one element of the graphical user interface of the remote display to the transmitted accent color. This allows for adaptation of a plurality of interfaces arranged in the vehicle thus creating a better user experience.

The first display may be a centre stack display of a vehicle, and the remote display may be a cluster display of the same vehicle.

In one embodiment the remote display is a display of an external device being in communication with the vehicle. The external device may be a mobile phone or a tablet.

In one embodiment the image is selected by the user.

In an alternative embodiment, the image is automatically selected based on different input.

### Brief Description of Drawings

The invention will from hereon be described with reference to the appended drawings, in which:
Fig. 1 is a front view of a part of the interior of a vehicle having at least two displays;
Fig. 2 is a schematic view of a method according to an embodiment;
Fig. 3 is a schematic view of a pre-set color palette according to an embodiment;
Fig. 4 is a schematic view of a HUE diagram according to an embodiment;
Fig. 5 is a front view of a display according to an embodiment;
Fig. 6 is a front view of a display according to an embodiment; and
Fig. 7 shows a schematic block diagram illustrating some main elements of a system in a vehicle according to an embodiment.

### Detailed Description

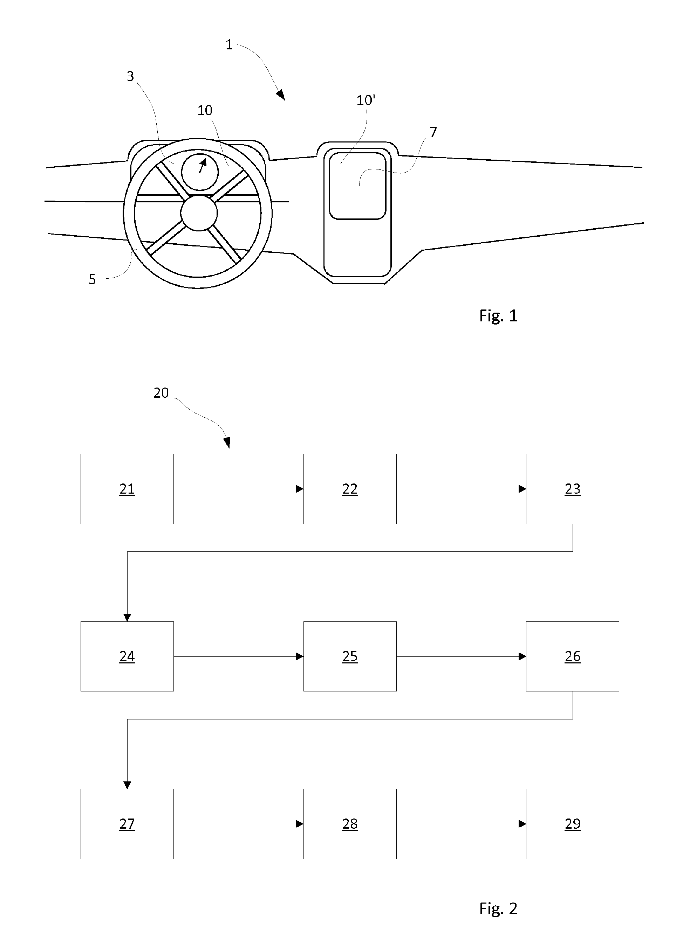

Starting in Fig. 1, a general configuration of a vehicle's interior 1 is shown. A cluster display 3, or dashboard, is arranged behind a steering wheel 5. Between the driver's seat and the front passenger seat a centre stack display 7 is positioned. The cluster display 3 is preferably used for displaying current driving conditions, such as speed, rpm, fuel level, etc., while the centre stack display 7 is configured to display other information such as fan speed, interior temperature, position data (GPS information), and other infotainment data such as music. The display may be a non-touch display or a touch-sensitive display. Although not shown, the vehicle could be arranged with multiple displays placed anywhere in the interior of the car, for example screens arranged on the back of the rear seats.

Each display 3, 7 has a graphical user interface 10, 10' for allowing the user to interact with the various functions of the vehicle. For this, at least the centre stack display 7 may be configured to receive user input in order to change certain parameters. User input may be handled e.g. by utilizing a touch screen, or by utilizing manual buttons or knobs. User input may also be handled by input means such as a keypad with alpha-numeric keys and/or other keys such as arrow keys (navigation keys) and functional keys (soft keys), and/or a joystick, touch pad, rotator, etc. The display and input means may be jointly realized by a touch-sensitive display in some embodiments.

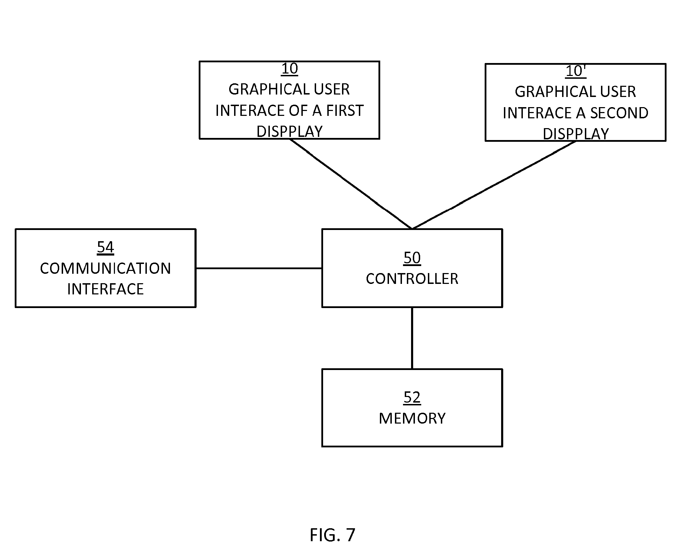

In one embodiment, the graphical user interface 10, 10' in the vehicle can be controlled using an external device (not shown) being in communication with the vehicle. Such external device may be a smart phone, a tablet, or any other device being capable of short range communication with a controller 50 of a vehicle (as seen in Fig. 7).

It is beneficial if the graphical user interfaces 10, 10' arranged in the vehicle can be personalized by showing a preferred selected image. The image may be selected by a user using input means as described above, automatically selected by the controller 50 of the vehicle and/or a combination of the user input and the input from the controller 50. The step of selecting an image is described more in conjunction to step 21 in Fig. 2.

In the following the image will be referred to as a background image, but it will be apparent for the skilled reader that any type of image could be used. The background image is preferably used in certain display modes, such as an idle mode during startup, or a standby mode for the centre stack display 7 during driving.

In the following, embodiments of a method for automatically adapting the graphical user interfaces 10, 10' will be described. All embodiments are directed to the general idea of performing an automatic adaptation of a graphical user interface 10, 10' once an image has been selected.

Now turning to Fig. 2, one example of a method 20 will be described. In a first step 21 a background image is selected. The background image may e.g. be a pre-stored image in an image library arranged in a memory of the vehicle, or the background image may be an uploaded image. For such embodiment, the vehicle includes means, such as Bluetooth communication links or other data transfer means, to allow for a user to actively add images to the image library. This step may be performed by a user accessing a Profile Manager of the infotainment system of the vehicle via the graphical user interface 10' of the centre stack display so that the user can select a preferred image

The image may also be selected by the controller 50 of the vehicle based on different inputs. The image could be selected by the location of the vehicle (for example using GPS information) and/or based on connected cloud systems (for example connected to an external device of the user such as a mobile phone). The controller 50 may be configured to identify user pattern of the user and show an appropriate image based on his/hers current location, calendar activity, which music is playing or other previous user input (such as approval of certain color pattern or the dislike of certain motives in the image).

For example, if the vehicle is driving through a wine district in France, the selected image by the controller may be an image showing a wine bottle, grapes or a map of the surrounding areas. In another example the user is listening to relaxing music at a low volume, and the controller may be configured to select an image that suits the music such as an image of an ocean or a beach.

In a following step 22, the method copies the image and performs a size reduction of the copied image. The size reduction is done by transforming the image to a quadratic shape with a reduced number of pixels. For example, if the selected background image has a resolution of 1024x768 pixels, the resulting image from step 22 has a resolution of 16x16 pixels. It should however be understood that other transformations are also possible; in other embodiments this step could even be omitted although it is preferred for improving processing speed and performance of the method.

In a subsequent step 23 the dominant color will be determined from the transformed image resulting from step 22. The dominant color may be determined using various algorithms. In one embodiment, the dominant color may be determined by creating a color histogram, wherein each bin corresponds to a certain interval of similar colors. For each pixel it is determined which bin it belongs to, wherein that particular bin is incremented by one. After each pixel (or a subset of the pixels) has been analyzed with a corresponding update of the color histogram, the dominant color is determined by choosing the greatest bin, and optionally determining a specific mean color of the certain interval of colors within that bin. Other well-known algorithms for determining a dominant color of an image may be utilized as well.

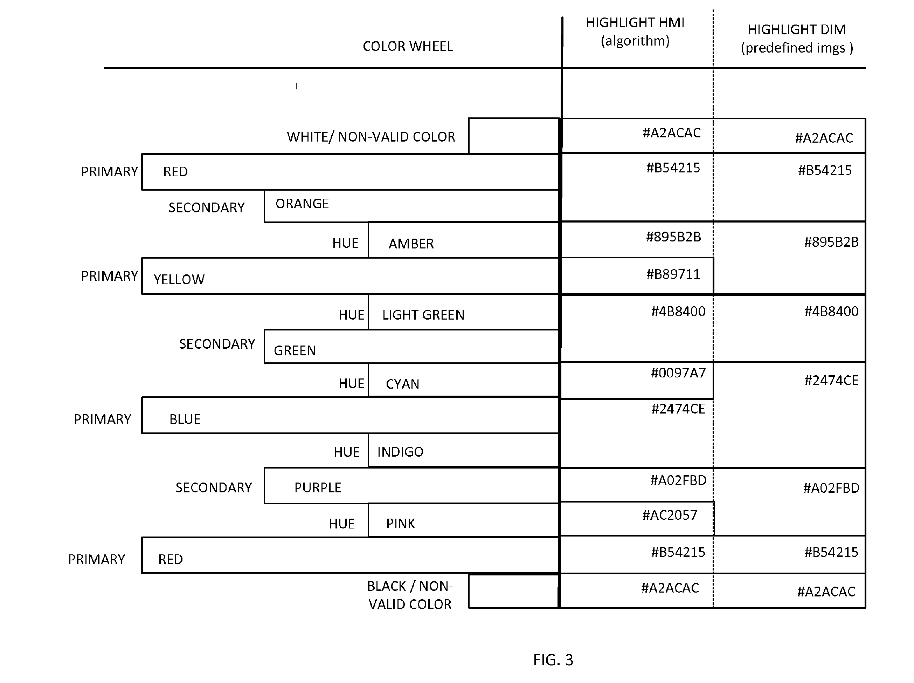

Once the dominant color is determined, a next step 24 is performed in which the dominant color is matched with an accent color of a pre-set color palette. The pre-set color palette, of which one example is schematically shown in Fig. 3, is used for limiting the number of available colors for the resulting user interface 10. The accent color is thus determined based on the computed dominant color. With reference to the example of Fig. 3, the determined dominant color should be any of the colors listed in the column "color wheel". In a preferred embodiment, these available colors correspond to the bins used in the previous step. As can be seen in Fig. 3, a white or by other means non-valid dominant color corresponds to a light grey accent color (referenced #A2ACAC). White and/or black pixels can thus be considered to be ignored when computing the dominant color.

The right most columns list available accent colors for use with the graphical user interfaces 10, 10'. The column labeled "HIGHLIGHT HMI" includes the available accent colors resulting from uploaded background images, while the column labeled "HIGHLIGHT DIM" includes a reduced number of available accent colors resulting from the pre-stored background images.

For example, if the determined dominant color for an uploaded image is cyan, the resulting accent color is chosen from "HIGHLIGHT HMI" which in this example is #0097A7. However, if this specific accent color is not available for pre-stored background images, the resulting accent color is chosen from "HIGHLIGHT DIM" which in this example is #2474CE. It should be realized that the exact number of available accent colors could vary depending on the particular application.

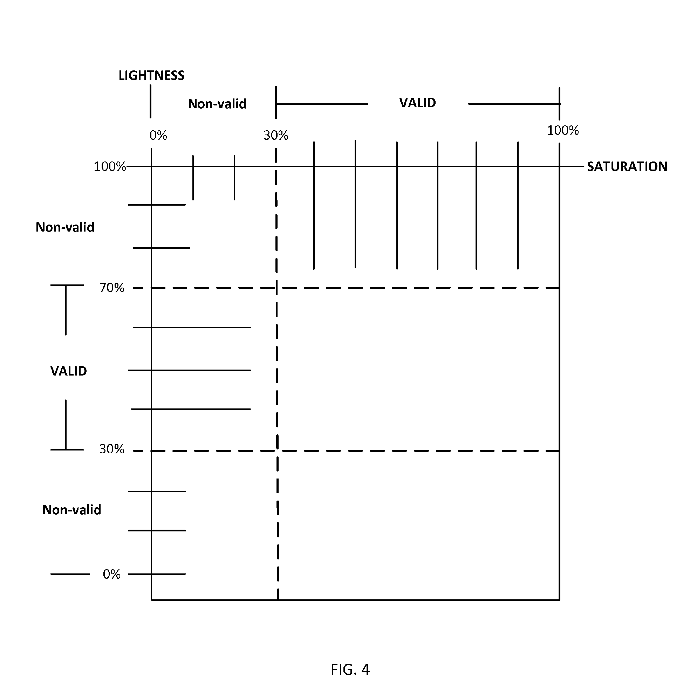

In a following step 25 the HUE levels of the determined dominant color will be analyzed to avoid any contrast issue with the background image, as well as with other elements of the graphical user interface 10, 10'. An illustration of the analyzing of step 25 is shown in Fig. 4. For a specific color the lightness and saturation is calculated. In the diagram of Fig. 4 the Y-axis corresponds to the lightness, while the X-axis corresponds to the saturation. In a preferred embodiment the color is assumed to be a valid color only if the lightness and saturation values lie within predetermined intervals having a upper and lower threshold values. For example, the color will be valid only if the saturation level is at least 30%, and the lightness level is between 30% and 70%. It should be realized that other intervals of the saturation and lightness values could be implemented as well.

Following the analyzing step 25, a subsequent step 26 is performed in which the validity of the dominant color is checked. If the saturation and lightness values fall outside the valid interval, the dominant color will be rejected and a default accent color will be determined, as indicated in Fig. 3 on the uppermost row (non-valid color). As is evident, steps 25 and 26 may be performed prior to, or simultaneously to step 24 of matching the dominant color with the accent color.

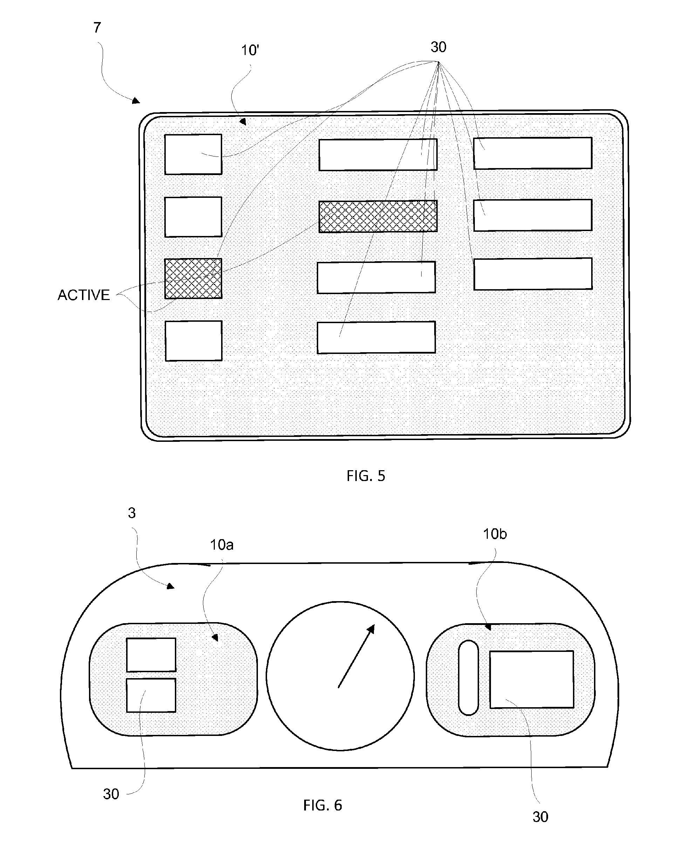

Once the accent color is determined, either being a color being close to or equal to the determined dominant color or the default color, in step 27 at least some parts of the graphical user interface 10, 10' is updated with the accent color. The image is thus applied to the graphical user interface 10, 10' and the color of least one element of the graphical user interface 10, 10' is changed to the determined accent color. In this way the at least one element of the graphical user interface 10, 10' now matches the color palette of the selected image. During the step of updating the color, the controller 50 of the vehicle (as seen in Fig. 7) transmits a signal with instructions that one or several predetermined parts of the graphical user interface 10, 10' shall change color to the accent color. These predetermined parts may be specific GUI elements (as described with reference to Fig. 5), lighting of certain parts of the vehicle and/or external devices arranged in the vehicle.

Further, in step 28 information regarding the determined accent color is transmitted to additional, or remote, graphical user interfaces of the vehicle, such as the graphical user interface 10 of the cluster display 3 or a display arranged on an external device. In a final step 29, the additional element(s) of the graphical user interface 10 is updated in accordance with the determined accent color, whereby all connected graphical user interfaces 10, 10' share the same theme defined by the accent color. An appealing design of the graphical user interfaces 10, 10' has thus been achieved automatically based on the selected background image.

The determined accent color may also be used to update the lightning, so called mood lightning, in the vehicle. The mood lightning may be light generated from different parts of the interior of the vehicle, for example below the door handle, in the footwell, inside air vents, in the sill molding or other decorative elements in the car. The controller 50 transmits a signal to one or more mood lighting devices being configured to provide mood lightning so that these lighting devices changes the color of the emitted light into the accent color. Updating the mood lighting with the accent color further increases the appealing design inside the vehicle.

With reference to Fig. 5 a graphical user interface 10' of the centre stack display 7 is shown comprising a plurality of GUI elements 30. The GUI elements 30 may represent menus or information relating to fan speed, interior temperature, position data, and other infotainment data such as music being played. The GUI element may be in an either active (or by a user selected) or inactive state. Preferably, both the active and inactive state of the GUI element may be assigned a suitable color. The grid pattern in Fig. 5 indicates how an active, or by a user selected, GUI element 30 changes color to indicate the active state. The color highlighting is performed using the determined accent color or, as will be described below, using a secondary accent color.

Each possible accent color may have one or several predetermined secondary accent color that matches with the accent color. Secondary accent colors may for example include different shades, tints and/or tones of the accent color. The secondary accent color may also be the accent color having different degree of transparency or opaqueness so that they are different, but match, the accent color. The secondary accent color may also be a color, such as another accent color, that is predetermined to be a matching color to the accent color. The secondary accent color may be determined based on the same method as determining the accent color.

In one embodiment, the inactive GUI elements are updated with the secondary accent color and the active GUI element is updated with the accent color. In an alternative embodiment the inactive GUI elements are updated with the accent color while the inactive GUI elements are updated with the secondary accent color.

The accent color and the secondary accent color may be used to different parts of one and the same GUI element. For example, an accent color may be used for the text/figure and its corresponding secondary accent color is used for the filling/shading. Furthermore, the frame of the GUI-element may be updated with an accent color while the text/figure inside the frame is updated with a corresponding secondary accent color.

In Fig. 6 a graphical user interface 10 of the cluster display 3 is shown comprising a plurality of GUI elements 30.The GUI elements 30 may represent menus or information relating to current driving conditions such as speed, rpm, fuel level, etc. As for the graphical user interface of Fig. 5, the elements 30 may be highlighted by applying the determined accent color to the elements 30.

In the embodiment shown the cluster display 3 comprise two graphical user interfaces 10a, 10b. However, it should be noted that the cluster display 3 may comprise only one graphical user interface 10. Each graphical user interface 10a, 10b may be assigned with specific information, and each graphical user interface 10a, 10b may include elements 30 which are highlighted in accordance with the determined accent color.

Another example of a GUI element is one or several physical buttons having information-bearing icons constructed by one or a plurality of integrated LED-lights (not shown). Such buttons may for example be the knobs that control the air-condition of the vehicle. The color of the LED-lights may be updated with the determined accent color so as to further increase the appearance.

As seen in Fig. 7, the vehicle comprises a controller 50 being responsible for automatic adaptation of a graphical user interface 10,10'. Any commercially available central processing unit (CPU) or digital signal processor (DSP), or other programmable electronic logic device such as an application-specific integrated circuit (ASIC) or field-programmable gate array (FPGA), may be used to implement the controller 50. The controller 50 may be implemented using instructions that enable hardware functionality, for example, by using executable computer program instructions in a general-purpose or special-purpose processor that may be stored on a computer readable storage medium (disk, memory etc.) 52 to be executed by such a processor. The controller 50 is configured to read instructions from the memory 52 and execute these instructions to control the operation of the graphical user interfaces 10, 10'.

The memory 52 may be implemented using any commonly known technology for computer-readable memories such as ROM, RAM, SRAM, DRAM, FLASH, DDR, SDRAM, hard disk, or some other memory technology. The controller 50 uses the memory 52 for different purposes, for instance for storing file objects as well as data and program instructions for the software in the vehicle.

The instructions for executing the method of automatically adapt a graphical user interface may be stored in a computer program product comprising a computer readable medium. The computer program instructions are executed by the controller 50.

The controller 50 is operatively connected to the displays having the graphical user interface 10,10'. Such displays may be the centre stack display 7, the cluster display 3 and/or other displays arranged in the vehicle or being in communication with the vehicle. As already described, the graphical interfaces 10, 10' that are personalized could also be a graphical interface of an external device being in communication with the controller 50. For example, the user interface 10, 10' of the centre stack display 7, the cluster display 3 and the display of a mobile phone of the user, which is present in the vehicle, may be adapted simultaneously.

Furthermore, the controller 50 may be connected to various other elements present in the vehicle, such as microphone, loudspeaker, camera, power switch, battery, charger interface, accessory interface, volume controls and the like. Such elements are well known to the skilled person and do not require any specific description herein

As previously mentioned, in some embodiments the vehicle further comprises a communication interface 54 for allowing communication to an external device such as a mobile terminal such as a mobile phone, tablet or the like. Such communication technologies may be wired or wireless. Examples of such wired technologies are Universal Serial Bus (USB) and Ethernet to name a few. Examples of such wireless technologies are IEEE 802.11, IEEE 802.15, ZigBee, WirelessHART, WIFI, Bluetooth®, W-CDMA/HSPA, GSM, UTRAN and LTE to name a few. It should be noted that other technologies exist and are taken to be an obvious equivalent for such wireless communication interfaces. The communication interface 54 is operably connected to the controller 50.

The communication interface 54 allows the user to actively add images to the image library using an external device. Furthermore, the communication interface 54 allows the graphical user interface 10, 10' in the vehicle to be controlled using an external device being in communication with the vehicle and/or to adapt graphical interfaces 10, 10' of an external device being in communication with the controller 50.

It should be mentioned that the improved concept is by no means limited to the embodiments described herein, and several modifications are feasible without departing from the scope of the appended claims.

## Claims

1. A method for automatic adaptation of a graphical user interface in a vehicle, comprising:
selecting an image;
computing the dominant color of said image;
determining an accent color based on the computed dominant color, said accent color being selected from a limited number of available colors,
applying said image to a graphical user interface of a first display, and
updating the color of at least one element of said graphical user interface to the determined accent color.

2. The method of claim 1, wherein computing the dominant color of said image comprises:
reducing the size of the image, and
extracting the dominant color from the reduced image.

3. The method of claim 2, wherein reducing the size of the image is performed by transforming the image to a quadratic shape.

4. The method of claim 3, wherein reducing the size of the image results in an image size of 16x16 pixels.

5. The method according to any one of claims 1-4, wherein any black or white pixels are ignored when computing the dominant color.

6. The method according to any one of the preceding claims, wherein computing the dominant color of said image further comprises:
comparing the HUE levels of the determined dominant color with preset upper and lower threshold values, and if the HUE levels of the dominant color is outside said threshold values replacing the computed dominant color by a default dominant color.

7. The method according to any one of the preceding claims, further comprising transmitting information relating to the determined accent color to a graphical user interface of a remote display, and updating the color of at least one element of the graphical user interface of the remote display to the transmitted accent color.

8. The method according to claim 7, wherein said first display is a centre stack display of a vehicle, and wherein the remote display is a cluster display of the same vehicle.

9. The method according to claim 7, wherein said remote display is a display of an external device being in communication with the vehicle.

10. The method according to claim 9, wherein said external device is a mobile phone or a tablet.

11. The method according to any of the preceding claims, wherein the image is selected by the user.

12. The method according to any of claims 1- 10, wherein the image is automatically selected based on different input.

13. The method according to any preceding claims, wherein the vehicle comprises one or more lighting device for providing mood lighting and wherein the method further comprises:
updating the color of the mood lighting device(s) in the vehicle to the determined accent color.

14. A computer program product comprising a computer readable medium having thereon a computer program comprising program instructions for the execution of the method according to any one of claims 1-13.

15. A controller (50) having a processor and a memory (52), wherein said controller is configured to execute computer program instructions for performing the method according to any one of claims 1-13.
